# EUROPÄISCHE PATENTSCHRIFT

(11) **EP 0 527 846 B1**
(45) Veröffentlichungstag und Bekanntmachung des Hinweises auf die Patenterteilung: **31.08.1994**
(21) Anmeldenummer: 91909018.3
(22) Anmeldetag: 04.05.1991
(51) Int. Cl.: F16C 39/06

(54) **VIBRATIONSISOLATION EINES MAGNETISCH GELAGERTEN KÖRPERS**
VIBRATION INSULATION OF A BODY ON MAGNETIC BEARINGS
ISOLATION D'UN ELEMENT A PALIER MAGNETIQUE CONTRE LES VIBRATIONS

(30) Priorität: 08.05.1990 DE 4014716
(43) Veröffentlichungstag der Anmeldung: 24.02.1993
(73) Patentinhaber: Teldix GmbH, D-69046 Heidelberg (DE)
(72) Erfinder: BICHLER, Udo, D-6900 Heidelberg 1 (DE)
(74) Vertreter: Wiechmann, Manfred, Dipl.-Ing.
(86) Internationale Anmeldenummer: EP9100848
(87) Internationale Veröffentlichungsnummer: WO9117368

(56) Entgegenhaltungen:
- EP-A- 0 157 693
- EP-A- 0 413 030
- WO-A-84/00198
- DE-A- 3 819 205
- US-A- 4 691 152

## Beschreibung

Gegenstand der Erfindung ist eine Einrichtung nach dem Oberbegriff der Patentansprüche 1 und 2. Eine solche Einrichtung ist bekannt (US-A- 4 841 184).

Bei dem magnetisch gelagerten Körper kann es sich insbesondere um einen Rotor handeln, der durch seine Rotation störende Vibrationen erzeugt, die man vom Stator fernhalten will. Es kann sich ebensogut um ein empfindliches System handeln, das isoliert in einer vibrierenden Umgebung gelagert werden soll.

Aus der DE 26 58 668 A1 ist eine Vorrichtung zur Kompensation von synchronen, insbesonderevon Unwuchten herrührenden, Störeinflüssen bei einem magnetisch gelagerten Läufer mit wenigstens einem mit Wicklungen versehenem radialen Magnetlager bekannt. Die Lagerung des Läufers weist wenigstens eine Fühleinrichtung zur Erfassung der radialen Stellung des Läufers und einen mit der Fühleinrichtung und den Wicklungen verbundenen Regelkreis auf, der einen Steuerkreis zur Speisung der Wicklungen besitzt. Zur Positionsregelung des Läufers in einer vorbestimmten radialen Stellung werden dem Steuerkreis Signale der Fühleinrichtung zugeführt. Der Regelkreis weist zwischen der Fühleinrichtung und dem Steuerkreis eine Filtereinrichtung auf, welche für die von der Fühleinrichtung erzeugten Signale wenigstens auf einer der Drehgeschwindigkeit des Läufers entsprechenden Frequenz ein Sperrfilter bildet.

Weiter ist aus der US-PS 4 841 184 ein Magnetlager mit einer Vorrichtung zur Unterdrückung von Unwuchtbewegungen des Rotors bekannt. Das Magnetlager enthält Wicklungen, die, in Verbindung mit einer Sensoreinrichtung zur Messung der Rotorposition und einer damit verbundenen Steuereinrichtung, zur Erzeugung von die Rotorposition regelnden Kräften dienen. Die Steuereinrichtung enthält Integratoren zur Rekonstruktion von der Geschwindigkeit und der Beschleunigung entsprechenden Signalen aus der Position des Rotors. Diese Signale dienen als zusätzliche Rückführung für die Regelung.

### Aufgabe

Der Erfindung liegt die Aufgabe zugrunde, eine Einrichtung zu schaffen, durch die die von außen auf den magnetisch gelagerten Körper oder vom magnetisch gelagerten Körper auf seine Umgebung einwirkende Vibrationen unterdrückt werden können.

Diese Aufgabe wird durch die im Kennzeichen der Ansprüche 1 und 2 angegebenen Merkmale gelöst. Vorteilhafte Ausgestaltungen ergeben sich aus den Unteransprüchen und aus der Beschreibung.

Die vorgeschlagene Einrichtung stellt sicher, daß die Soll-Position des gelagerten Körpers langsamen Bewegungen des Stators folgt, jedoch höherfrequente Störungen nicht übertragen werden. Insbesondere sind schnelle Positions-Regelvorgänge weiterhin möglich, so daß ein solcher Körper als Stellelement in einer Satelliten Lageregelung verwendet werden kann.

Bei dieser Einrichtung wird ein der, den magnetisch gelagerten Körper in einer der translatorischen Achsen oder in einer der beiden sich senkrecht zur Drehachse befindlichen Kippachsen stabilisierenden, Kraft bzw. dem Drehmoment proportionales Signal auf eine elektronisch oder in einem Digitalrechner realisierte zweifache Integrationseinrichtung gegeben. Das jeweilige Ausgangssignal wird anstelle des tatsächlichen Positionssignals des Körpers als Istwert für die Positionsregelung verwendet. Die Differenz aus dem Ausgangssignal der zweifachen Integrationseinrichtung und dem Positionssignal wird einem Tiefpassfilter zugeführt, dessen Ausgangssignal über geeignete Abschwächungsglieder auf die Eingänge der beiden Integratoren gegeben wird, um Drifteffekte zu kompensieren.

### Figurenbeschreibung

Die Erfindung wird anhand der folgenden Zeichnungen näher erläutert.
Es zeigen:
- Fig. 1: Das Prinzip der Vibrationsisolation,
- Fig. 2: ein Ausführungsbeispiel einer Vibrationsisolation mit Doppel-Integrator bei einem translatorischen Lageregelkreis,
- Fig. 3: ein vereinfachtes Ausführungsbeispiel einer Vibrationsisolation mit kombiniertem Doppel-lntegrator-Regler, ebenfalls bei einem translatorischen Lageregelkreis,
- Fig. 4: ein Ausführungsbeispiel einer Kippachsenregelung eines Rotors mit Störunterdrückung.

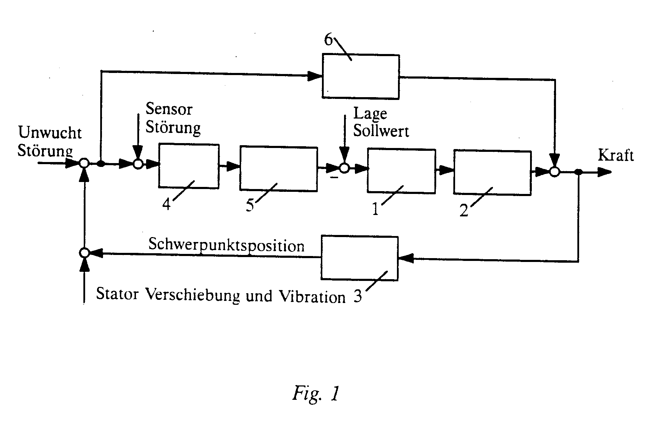

In Fig. 1 ist das Prinzip eines translatorischen magnetischen Lageregelkreises für einen rotierenden Körper 3 dargestellt. Da in diesem Zusammenhang die Störkraft die interessierende und zu beeinflussende Grösse ist, ist die Kraft als Ausgang des Kreises gezeichnet. Die Eingänge sind neben dem Lage-Sollwert insbesondere die Störungen, die letztlich die Störkräfte verursachen.

Der Regler 1 erhält die Differenz aus Sollwert und Positionssensorsignal und formt daraus ein Stellsignal, das von dem Leistungsverstärker 2 in Strom und damit in Kraft umgesetzt wird. Die Kraft bewegt den Rotor 3, es entsteht eine Veränderung der Position des Rotorschwerpunktes. Dies ist die Grösse, die eigentlich gemessen werden soll. Der Schwerpunktsverschiebung überlagert sich jedoch zunächst eine durch externe Kräfte hervorgerufene Verschiebung des Stators. Weiterhin gibt es eine durch die unvermeidbare Rest-Unwucht verursachte Schleuderbewegung, die natürlich vom Sensor 4 mit erfasst wird. Außerdem misst der Sensor 4 auch Oberflächenfehler der Messfläche des Rotors 3 mit. Schliesslich produziert jedes Messverfahren auch elektronische Störungen. Alle diese Störungen im Sensorsignal werden nun erfindungsgemäß in einem besonderen Block Störunterdrückung 5 weitgehend eliminiert, bevor sie über Regler 1 und Leistungsverstärker 2 in Kraft umgesetzt werden. Die Störunterdrückung (= Vibrationsisolation) muss in solch einer Weise geschehen, daß die Funktion der Lageregelung davon nicht beeinträchtigt wird.

Es können noch auf einem weiteren Weg Störkräfte entstehen, wie in Fig. 1 durch den Block Spalt-Kraft Kopplung 6 eingetragen. Die meisten Magnetlager basieren nämlich auf dem elektromagnetischen Krafterzeugungsprinzip, eventuell unterstützt durch einen stationären Permanentmagnetfluss. Diese Prinzipien setzen direkt Veränderungen des magnetischen Spaltes in Fluss- und damit in Kraftänderungen um. So erzeugen also Unwuchtbewegungen des Rotors und Bewegungen des Stators unmittelbar entsprechende Kräfte, ohne daß dies von einer Störunterdrückung verhindert werden könnte.

Die Erfindung schlägt als Lösung des Vibrationsproblems für die Lageregelkreise neuartige regelungstechnische Einrichtungen vor, worin die Blöcke Störunterdrückung 5 und Regler 1 in Fig. 1 neu sind. Im Zusammenhang damit wird auch, ein Krafterzeugungsprinzip, das keine Kopplung von einem sich verändernden Spalt auf die Kraft aufweist, vorgeschlagen.

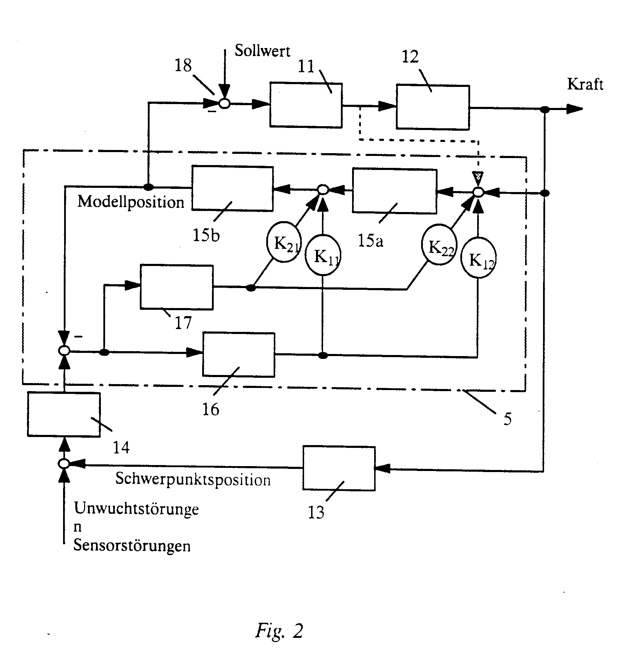

Das erfindungsgemässe Prinzip der Vibrationsisolation mit Doppel-Integrator wird anhand von Fig. 2 erläutert. Fig. 2 entspricht Fig. 1, d.h. die Kästen 11 .. 14 entsprechen den Kästen 1 ..4, wobei die Spalt-Kraft Kopplung 6 weggelassen wurde. Das strich-punktiert eingerahmte Gebilde entspricht dem Block Störunterdrückung 5 aus Fig. 1. Das Prinzip ist, daß Rotor 13 und Sensor 14 durch ein Modell nachgebildet werden, das aus einem doppelten Integrator (DI) 15 besteht. Der DI 15 kann, ebenso wie die Regelung, entweder elektronisch oder programmtechnisch in einem Rechner realisiert werden.

Der DI 15 hat als Verstärkung die inverse Masse des gelagerten Körpers 13 multipliziert mit der Sensorverstärkung. Er wird mit der Kraft gespeist, die auf den gelagerten Körper 13 wirkt. Praktisch wird man anstelle der Kraft ein Signal verwenden, das der Kraft proportional ist, beispieisweise den Reglerausgang des Reglers 11, wie in Fig. 2 gestrichelt dargestellt. Die Verstärkung des DI 15 muss dann um den Proportionalitätsfaktor zwischen dem verwendeten Signal und der tatsächlichen Kraft ergänzt werden.

Das Ausgangssignal des DI 15 entspricht der Position des gelagerten Körpers 13, enthält jedoch nicht die Störungen. Daher wird es anstelle des Sensorsignales als Istwert für die Lageregelung verwendet. Die Stabilität der Regelung und die Dynamik bezüglich Sollwertänderungen wird hiervon nicht verändert, nur die Störungen werden unterdrückt.

Aufgrund von Ungenauigkeiten in der Verstärkung und dem Zeitverhalten, elektronischen Temperatur- und Offseteffekten usw. kann sich das Ausgangssignal des DI 15 nach einiger Zeit von der wahren Position unterscheiden. Um dies zu verhindern, wird die Differenz aus dem Positionssensorsignal und dem Ausgangssignal des DI 15 auf die Integratoren 15 zurückgeführt. So werden diese langfristigen Drifteffekte kompensiert, indem das DI-Ausgangssignal dem Sensorsignal nachgeführt wird. Diese Rückführung wird natürlich sehr niederfrequent ausgelegt, damit nicht die Störungen auf diesem Wege wieder im Regelkreis erscheinen. Die Differenz wird daher zunächst durch einen Tiefpass 16 sehr niedriger Grenzfrequenz geschickt, bevor sie über kleine Faktoren K11, K12 auf die Integratoren 15 gegeben wird. Diese korrigierende Rückführung wird so langsam bzw. niederfrequent eingestellt, dass zwar die entsprechend langsamen Drifteffekte ausgeregelt werden, jedoch die höherfrequenten Störungen praktisch nur in geringstem Maße hindurchkommen.

Wenngleich die Lageregelung bezüglich Sollwertänderungen unverändert schnell ist, sind doch durch externe Störkräfte hervorgerufene Statorbewegungen ein Problem, falls diese den Lagerluftspalt unzulässig verkleinern. Ebenso wie die Regelung Statorvibrationen praktisch nicht 'sieht' und damit der gelagerte Körper 13 keine Störkräfte spürt, kann sich der Stator nahezu unbemerkt davonbewegen. Um dies zu verhindern, wird die o.g. Differenz einem Grenzwertschalter 17 zugeführt, der bei Überschreitung eines Grenzwertes, beispielsweise des halben verfügbaren Lagerluftspaltes, über eine weitere Rückführung, ohne Tiefpass und mit höherer Verstärkung K21, K22, die Integratoren 15 schnell der tatsächlichen Position nachführt. Während des Eingriffs dieser schnellen Rückführung ist natürlich die Vibrationsisolation nur noch eingeschränkt wirksam, abhängig von der Verstärkung dieser Rückführung.

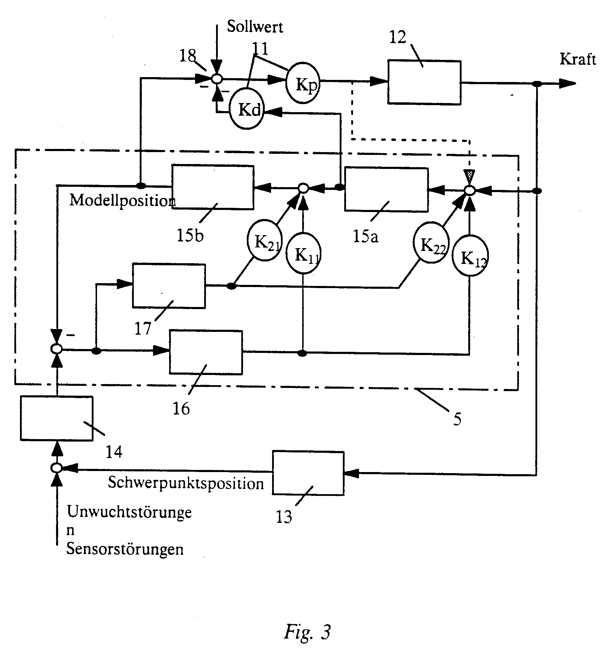

Fig. 3 zeigt eine mögliche Vereinfachung des Reglers. Der Regler (1, 11) eines magnetischen Lageregelkreises enthält meist einen proportionalen Anteil Kp und einen differenzierenden Anteil (Td s + 1). Letzterer kann entfallen, wenn zusätzlich das Ausgangssignal des ersten Integrators 15a auf den Soll-Ist Vergleichspunkt 18 gegeben wird. Der zugehörige Faktor Kd ist das Produkt aus der Verstärkung des zweiten Integrators 15b und der ehemaligen Regler-Differenzierzeitkonstante Td. Da nunmehr die Differentiation im Regler entfällt, wird nicht nur das System vereinfacht, sondern auch die Vibrationsisolation weiter verbessert.

Eine Variante der Erfindung kann verwendet werden, falls das Kraftsignal nicht mittelwertfrei ist, also beispielsweise bei Lagerung eines Körpers unter Schwerkrafteinwirkung. Anstatt die Schwerkraft im DI 15 nachzubilden, wird das Kraftsignal differenzierend in den DI 15 eingekoppelt. Dafür erhält der erste Integrator 15a eine Gegenkopplung, so dass im Bereich sehr kleiner Frequenzen aus dem ersten Integrator 15a ein Tiefpass erster Ordnung wird.

Die Erfindung wurde bisher an einem translatorischen Lageregelkreis des Magnetlagers erläutert, sie ist natürlich ebenso für die rotatorischen Kreise geeignet. Dann tritt an die Stelle der Lage der Winkel, anstelle der Kraft das Moment, anstelle der Masse das Trägheitsmoment um die jeweilige Drehachse und die Unwucht-Schleuderbewegung ist eine Wirbelbewegung.

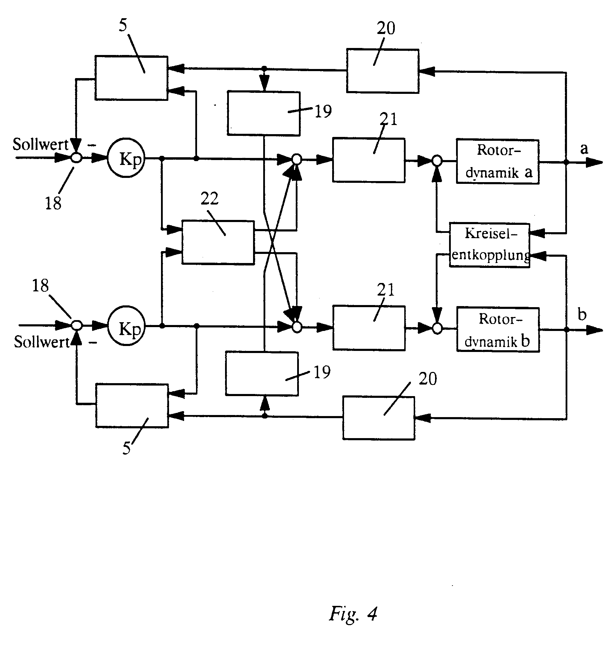

Fig. 4 erläutert die kombinierte Regelung mit Vibrationsisolation für den Einsatz der Erfindung in den beiden zur Drehachse des Rotors senkrechten Kippachsen. Damit das Doppel-Integrator Prinzip anwendbar bleibt, müssen mittels einer in der DE-A-38 19 205 vorgeschlagenen Kreiselentkopplung 22 die Verkopplungen der beiden Kippachsen α, β aufgehoben werden. Weiterhin kann eine Nutationsschwingung entstehen, die wegen der Vibrationsisolation von der Regelung praktisch kaum gedämpft wird. Daher wird eine zusätzliche Kreuz-Verkopplung 19 der Kippachsen α, β eingeführt, die jeweils den Ausgang eines Sensors 20 mit dem Eingang des Leistungsverstärkers 21 der anderen Achse verbindet. Die Kreuzkoppelelemente 19 sind Differenzierglieder mit Verzögerung, die ihre maximale Verstärkung bei der Nutationsfrequenz aufweisen. Diese Verstärkung wird als ein Kompromiss so eingestellt, daß eine hinreichende Dämpfung der Nutationsschwingungen entsteht, ohne dabei zuviel Störungen in die Kreise einzukoppeln. Kasten 5 entspricht der in den Figuren 1 und 2 bereits angesprochenen Störunterdrückung.

Die vorgeschlagene Störungsisolation kann weiter verbessert werden durch ein Krafterzeugungsprinzip, das keine Spalt-Kraft Kopplung 6 (Fig. 1) aufweist. Dies ist das elektrodynamische Prinzip. Der gelagerte Körper 3, 13 (Fig.3,13) weist ein oder mehrere permanentmagnetisch erzeugte Felder auf, in die statorseitig eisenlose Spulen tauchen, die von stromeinprägenden Leistungsverstärkern gespeist werden. Dieses Prinzip hat hier, neben Linearität, Bidirektionalität und sehr kleinen Zeitkonstanten, insbesondere den Vorteil, dass die erzeugte Kraft nur vom Strom abhängt, jedoch (homogenes Feld vorausgesetzt) nicht von Bewegungen des gelagerten Körpers. Unwuchtbewegungen werden somit nicht in Unwuchtvibrationen umgesetzt, das heisst, ein Rotor kann um seinen Schwerpunkt bzw. seine Trägheitsachse rotieren, ohne daß die resultierenden Schleuder- und Wirbelbewegungen der Oberfläche entsprechende Vibrationen erzeugen. Entsprechendes gilt für Bewegungen des Stators, die den Rotor nicht beeinflussen.

Eine besonders interessante Anwendungsmöglichkeit ist ein magnetisch gelagertes Schwungrad zur Satellitenstabilisierung, das mit den beschriebenen Störunterdrückungsmassnahmen ausgerüstet ist. Dieses kann in vibrationsempfindlichen Satelliten, beispielsweise in Space-Teleskopen, eingesetzt werden, wobei es zur Lageregelung in einem Feinausrichtbereich bei gleichzeitiger Vibrationsarmut genutzt werden kann.

## Patentansprüche

1. Einrichtung, bestehend aus einem magnetischen Positionsregelkreis, bei dem zwischen einem Sensor (4; 14) und einem Regler (1; 11) Mittel eingefügt sind, die zwei Integratoren aufweisen und zur Abschwächung der Störkräfte dienen, welche bei der magnetischen Lagerung eines Körpers, insbesondere eines rotierenden Körpers entstehen, dadurch gekennzeichnet,
daß ein Signal auf eine zweifache Integrationseinrichtung mit den beiden Integratoren (15a, 15b) gegeben ist, das wenigstens näherungsweise einer Kraft proportional ist, die den Körper (3; 13) in einer seiner translatorischen Achsen stabilisiert, daß das Ausgangssignal der zweifachen Integrationseinrichtung (15a, 15b) als Istwert im Positionsregelkreis dient und die Differenz zwischen dem Ausgangssignal und einem Positionssignal über ein Tiefpaßfilter (16) und Abschwächungsglieder (K11, K12) den Eingängen der beiden Integratoren (15a, 15b) zugeführt ist.

2. Einrichtung, bestehend aus einem magnetischen Positionsregelkreis, bei dem zwischen einem Sensor (4; 14) und einem Regler (1; 11) Mittel eingefügt sind, die zwei Integratoren aufweisen und zur Abschwächung der Störkräfte dienen, welche bei der magnetischen Lagerung eines Körpers, insbesondere eines rotierenden Körpers entstehen, dadurch gekennzeichnet,
daß ein Signal auf eine zweifache Integrationseinrichtung mit den beiden Integratoren (15a, 15b) gegeben ist, das wenigstens näherungsweise einem Drehmoment proportional ist, das den Körper (3; 13) in einer der beiden senkrecht zu seiner Drehachse angeordneten Kippachsen stabilisiert,
daß das Ausgangssignal der zweifachen Intgrationseinrichtung (15a, 15b) als Istwert im Positionsregelkreis dient und die Differenz zwischen dem Ausgangssignal und einem Positionssignal über ein Tiefpaßfilter (16) und Abschwächungsglieder (K11, K12) den Eingängen der beiden Integratoren (15a, 15b) zugeführt ist.

3. Einrichtung nach Anspruch 1, dadurch gekennzeichnet, daß die Verstärkung der zweifachen Integrationseinrichtung (15a, 15b) gleich dem Verhältnis der tatsächlich auf den Körper (3, 13) wirkenden Kraft zu dem Eingangssignal der zweifachen Integrationseinrichtung (15a, 15b) ist, dividiert durch die Masse des magnetisch gelagerten Körpers (3, 13) und multipliziert mit der Verstärkung des Positionssensors (4, 14).

4. Einrichtung nach Anspruch 2, dadurch gekennzeichnet, daß die Verstärkung der zweifachen Integrationseinrichtung (15a, 15b) gleich dem Verhältnis des tatsächlich auf den Körper (3, 13) wirkenden Drehmomentes zu dem Eingangssignal der zweifachen Integrationseinrichtung (15a, 15b) ist, dividiert durch das Kipp-Trägheitsmoment des magnetisch gelagerten Körpers (3, 13) und multipliziert mit der Verstärkung des Positionssensors (4, 14).

5. Einrichtung nach einem der vorherigen Ansprüche, dadurch gekennzeichnet, daß die Differenz aus dem Ausgangssignal der zweifachen Integrationseinrichtung (15a, 15b) und dem Positionssignal von einem Grenzwertmelder (17) überwacht wird und daß bei Überschreiten des Grenzwertes diese Differenz ein weiteres Mal mit höherer Verstärkung (K21, K22) auf die Eingänge der Integratoren (15a, 15b) gegeben wird.

6. Einrichtung nach einem der vorherigen Ansprüche, dadurch gekennzeichnet, daß der Ausgang des ersten Integrators (15a) über eine Verstärkung (Kd) zusätzlich auf den Soll-Ist Vergleichspunkt (18) der Regelung gegeben wird und der Regler (11) ein Proportionalregler (Kp) ist.

7. Einrichtung nach einem der vorherigen Ansprüche, dadurch gekennzeichnet, daß das Eingangssignal der zweifachen Integrationseinrichtung (15a, 15b) über ein Differenzierglied geführt wird und der erste Integrator (15a) mit einer proportionalen Gegenkopplung versehen ist.

8. Einrichtung nach einem der vorherigen Ansprüche, dadurch gekennzeichnet, daß das elektrodynamische Prinzip der Kraft- oder Drehmomenterzeugung verwendet wird.

9. Einrichtung nach Anspruch 2 oder 4, angewendet in einem Regler für einen rotierenden Körper in beiden sich senkrecht zur Drehachse befindlichen Kippachsen, dadurch gekennzeichnet, daß zur Entkopplung der Kippachsen eine Entkoppeleinrichtung (22) verwendet wird, bei der die Ausgangssignale der Kippregler (Kp) durch eine integrale, in ihrer Zeitkonstante umgekehrt drehzahlproportional nachgeführte, wechselseitige Vorwärtsverkopplung miteinander verknüpft werden.

10. Einrichtung nach Anspruch 2 oder 4, dadurch gekennzeichnet, daß zur Dämpfung von Nutationsschwingungen eine Kreuzkopplung (19) zwischen den zur Drehachse senkrechten Kippachsen des Rotors (3,13) eingefügt wird dergestalt, daß die Ausgangssignale der Winkellagesensoren (20) jeweils über ein Differenzierglied mit Verzögerung auf den Eingang der Leistungsverstärker (21) in der dazu senkrechten Kippachse gegeben werden.

11. Einrichtung nach einem der vorherigen Ansprüche, gekennzeichnet dadurch, daß sie Bestandteil eines magnetisch gelagerten Schwungrades für die Winkellageregelung in einem Satelliten ist.

## Claims

1. A device, consisting of a magnetic position control circuit, where means are inserted between a sensor (4; 14) and a control unit (1; 11), which have two integrators and are used for weakening the interference forces which are created in the course of seating a body, in particular a rotating body, on magnetic bearings,
characterized in that
a signal, which is at least approximately proportional to a force which stabilizes the body (3, 13) in one of the translatory axes, is supplied to a dual integration device with both integrators (15a, 15b),
the output signal of the dual integration device (15a, 15b) is used as the actual value in the position control circuit, and the difference between the output signal and a position signal is supplied via a low bandpass filter (16) and attenuation members (K11, K12) to the inputs of the two integrators (15a, 15b).

2. A device, consisting of a magnetic position control circuit, where means are inserted between a sensor (4; 14) and a control unit (1; 11), which have two integrators and are used for weakening the interference forces which are created in the course of seating a body, in particular a rotating body, on magnetic bearings,
characterized in that
a signal, which is at least approximately proportional to the torque, stabilizing the body (3, 13) in one of the tilting shafts which are perpendicular to the axis of rotation, is supplied to a dual integration device with both integrators (15a, 15b),
the output signal of the dual integration device (15a, 15b) is used as the actual value in the position control circuit, and the difference between the output signal and a position signal is supplied via a low bandpass filter (16) and attenuation members (K11, K12) to the inputs of the two integrators (15a, 15b).

3. A device in accordance claim 1, characterized in that the amplification of the dual integration device (15a, 15b) is equal to the proportion of the force which actually acts on the body (3, 13) to the input signal of the dual integration device (15a, 15b), divided by the mass of the body (3, 13) on magnetic bearings and multiplied by the amplification of the position sensor (4, 14).

4. A device in accordance claim 2, characterized in that the amplification of the dual integration device (15a, 15b) is equal to the proportion of the torque which actually acts on the body (3, 13) to the input signal of the dual integration device (15a, 15b), divided by tilt-inertia moment of the body (3, 13) on magnetic bearings and multiplied by the amplification of the position sensor (4, 14).

5. A device in accordance with one of the preceding claims, characterized in that the difference between the output signal of the dual integration device (15a, 15b) and the position signal is monitored by a threshold value indicator (17) and that, if the threshold value is exceeded, this difference is supplied for a second time at higher amplification (K21, K22) to the inputs of the integrators (15a, 15b).

6. A device in accordance with one of the preceding claims, characterized in that the output of the first integrator (15a) is additionally supplied via an amplification (Kd) to the set-actual comparison point (18) of the control, and that the control unit (11) is a proportional control unit (Kp).

7. A device in accordance with one of the preceding claims, characterized in that the input signal of the dual integration device (15a, 15b) is passed through a differentiation member and that the first integrator (15a) is provided with a proportional counter coupling.

8. A device in accordance with one of the preceding claims, characterized in that the electrodynamic principle of force or torque generation is employed.

9. A device in accordance with claims 2 or 4, employed in a control for a rotating body in both tilting shafts extending perpendicularly to the axis of rotation, characterized in that a decoupling device (22) is used for decoupling the tilting shafts, where the output signals of the tilting controls (Kp) are linked together by means of an integral mutual forward coupling, which follows, reversely rpm-proportional in its time constant.

10. A device in accordance with claims 2 or 4, characterized in that for damping nutation oscillations a cross coupling (19) is inserted between the tilting shafts of the rotor (3, 13) which are perpendicular to the axis of rotation in such a way that the output signals of the angular position sensors (20) are each supplied with retardation via a differentiating member to the input of the power amplifiers (21) in the associated perpendicular tilting shaft.

11. A device in accordance with one of the preceding claims, characterized in that it is a component of a flywheel on magnetic bearings for the angular bearing control in a satellite.

## Revendications

1. Dispositif constitué d'un circuit magnétique de régulation de position, dans le cas duquel, entre un détecteur (4;14) et un régulateur (1;11) sont insérés des moyens qui présentent deux intégrateurs et servent à amortir les forces perturbatrices qui apparaissent dans le cas de la portée magnétique d'un organe, en particulier d'un organe en rotation, dispositif caractérisé
par le fait que l'on envoie à un dispositif de double intégration, présentant les deux intégrateurs (15a, 15b), un signal qui est, au moins approximativement, proportionnel à une force qui stabilise l'organe (3;13) selon l'un de ses axes de translation, par le fait que le signal de sortie du dispositif de double intégration (15a, 15b) sert de valeur réelle dans le circuit de régulation de position et par le fait que la différence entre le signal de sortie et un signal de position est envoyé aux entrées des deux intégrateurs (15a, 15b) en passant par un filtre passe-bas (16) et par des éléments amortisseurs (K11, K12).

2. Dispositif constitué d'un circuit magnétique de régulation de position, dans le cas duquel, entre un détecteur (4;14) et un régulateur (1;11) sont insérés des moyens qui présentent deux intégrateurs et servent à amortir les forces perturbatrices qui apparaissent dans le cas de la portée magnétique d'un organe, en particulier d'un organe en rotation, dispositif caractérisé
par le fait que l'on envoie à un dispositif de double intégration, présentant les deux intégrateurs (15a, 15b), un signal qui est, au moins approximativement, proportionnel à un moment de rotation, qui stabilise l'organe (3;13) selon l'un des deux axes de basculement disposés perpendiculairement à son axe de rotation,
par le fait que le signal de sortie du dispositif de double intégration (15a, 15b) sert de valeur réelle dans le circuit de régulation de position et par le fait que la différence entre le signal de sortie et un signal de position est envoyée aux entrées des deux intégrateurs (15a, 15b) en passant par un filtre passe-bas (16) et par des éléments amortisseurs (K11, K12).

3. Dispositif selon la revendication 1, caractérisé par le fait que le gain du dispositif de double intégration (15a, 15b) est égal au rapport entre la force agissant effectivement sur l'organe (3, 13) et le signal d'entrée du dispositif de double intégration (15a, 15b), divisé par la masse de l'organe à palier magnétique (3, 13) et multiplié par le gain du détecteur de position (4, 14).

4. Dispositif selon la revendication 1, caractérisé par le fait que le gain du dispositif de double intégration (15a, 15b) est égal au rapport entre le moment de rotation agissant effectivement sur l'organe (3, 13) et le signal d'entrée du dispositif de double intégration (15a, 15b), divisé par le moment d'inertie de basculement de l'organe à palier magnétique (3, 13) et multiplié par le gain du détecteur de position (4, 14).

5. Dispositif selon l'une quelconque des revendications précédentes, caractérisé par le fait qu'un indicateur de valeur limite (17) surveille la différence entre le signal de sortie du dispositif de double intégration (15a, 15b) et le signal de position et qu'en cas de dépassement de la valeur limite cette différence est, une nouvelle fois, envoyée, avec un gain plus élevé (K21, K22), aux entrées des intégrateurs (15a, 15b).

6. Dispositif selon l'une des revendications précédentes, caractérisé par le fait que le signal de sortie du premier intégrateur (15a) est en outre envoyé, par l'intermédiaire d'un gain (Kp), au point de comparaison valeur prescrite- valeur réelle (18) et par le fait que le régulateur (11) est un régulateur à action proportionnelle (Kp).

7. Dispositif selon l'une des revendications précédentes, caractérisé par le fait que le signal d'entrée du dispositif de double intégration (15a, 15b) passe par un élément différentiateur et par le fait que le premier intégrateur (15a) comporte un contre-couplage proportionnel.

8. Dispositif selon l'une des revendications précédentes, caractérisé par le fait que l'on emploie le principe électrodynamique de la production de la force ou du moment de rotation.

9. Dispositif selon la revendication 2 ou 4, appliqué dans un régulateur pour un organe en rotation selon deux axes de basculement perpendiculaires à l'axe de rotation, caractérisé par le fait que pour découpler les axes de basculement, on emploie un dispositif de découplage (22) dans le cas duquel les signaux de sortie des régulateurs de basculement (Kp) sont reliés logiquement l'un à l'autre au moyen d'un couplage aval, bidirectionnel alternatif, intégral, à constante de temps inversement proportionnelle à la vitesse de rotation.

10. Dispositif selon la revendication 2 ou la revendication 4, caractérisé par le fait que pour amortir les oscillations de nutation, on insère un couplage croisé (19) entre les axes de basculement, perpendiculaires à l'axe de rotation, du rotor (3, 13) de façon telle que les signaux de sortie des détecteurs (20) de position angulaire sont chacun fournis, par l'intermédiaire d'un organe différentiateur à retard, à l'entrée de l'amplificateur de puissance (21) correspondant à l'axe de basculement respectivement perpendiculaire.

11. Dispositif selon l'une des revendications précédentes, caractérisé par le fait qu'il fait partie intégrante d'un volant à palier magnétique pour la régulation de position angulaire dans un satellite.
